# EUROPEAN PATENT SPECIFICATION

(11) **EP 4 563 421 B1**
(45) Date of publication and mention of the grant of the patent: **27.05.2026**
(21) Application number: 23307117.4
(22) Date of filing: 01.12.2023
(51) Int. Cl.: B60T 7/10, B61H 13/02, B61H 13/34

(54) **AN UNLOCKING DEVICE FOR UNLOCKING A PARKING BRAKE OF A RAIL VEHICLE**
ENTRIEGELUNGSVORRICHTUNG ZUM ENTRIEGELN EINER FESTSTELLBREMSE EINES SCHIENENFAHRZEUGS
DISPOSITIF DE DÉVERROUILLAGE POUR DÉVERROUILLER UN FREIN DE STATIONNEMENT D'UN VÉHICULE FERROVIAIRE

(43) Date of publication of application: 04.06.2025
(73) Proprietor: ALSTOM Holdings, 93400 Saint-Ouen-sur-Seine (FR)
(72) Inventor: VANNESTE, Thomas, 59494 VALENCIENNES (FR); TOMZIK, Damian, 41-500 CHORZ¢W (PL)
(74) Representative: Plasseraud IP

(56) References cited:
- US-A1- 2012 073 411
- US-A1- 2022 355 836
- US-B1- 9 371 079

## Description

The present invention relates to an unlocking device for unlocking a parking brake of a rail vehicle.

When a parking brake of rail vehicle is actuated, it usually has to be manually deactivated by an operator in a downgraded mode. To this end, the parking brake system comprises a lever movable between an engaged position in which the parking brake is activated and a disengaged position in which the parking brake is deactivated.

This lever is usually arranged on a bogie of the rail vehicle, near the parking brake system actuator. Thus, the operator has to leave the train to reach the lever and manipulate it. Besides, in case the train is power supplied by a third rail on the ground, third rail power shall be discontinued for the safety of the operator, which might affect further operation on neighboring track segment. A hand held tool for easier access to a railway brake control element from a distance is disclosed in US Patent Application Publication 2012/073411 A1.

The purpose of this invention is to enable unlocking parking brake position directly from train without need of leaving the car train by operator.

To this end, the invention relates to an unlocking device for unlocking a parking brake of a rail vehicle, the unlocking device extending from a proximal end to a distal end, characterized in that the unlocking device comprises:
- a connection part arranged at the proximal end, comprising connection means for connecting the unlocking device to a groove of a door threshold of the rail vehicle,
- an arm comprising a telescopic part including a movable rod and a fix part, the movable rod being able to slide into the fix part, and the movable rod holding a lateral hook at the distal end,
- at least one linkage, extending along the unlocking device from the connection part to the movable rod, attached to a handle at the proximal end and attached to movable rod at the distal end.

The unlocking device of the invention allows an operator to reach to brake lever without leaving the car train. Thus, the risk of electric shock is minimized, and working condition are safer due to fact operation is made directly from train. The disruption of train service is also shorter due to the safer conditions.

A device of the invention may comprise any of the following features:
- The connection part comprises at least one manipulation handle.
- The arm is rotatably connected to the connection part, via a rotatable connection.
- The rotation around the rotatable connection is limited by a stop protruding from the arm, cooperating with the connection part, and secured by a protruding element of the arm, cooperating with the connection part.
- The handle is held by the protruding stop.
- The lateral hook is curved.
- The arm comprises a downward part holding the telescopic part, the downward part extending from the connection part to an attachment with the telescopic part.
- The attachment is a rotatable link.
- The linkage is a cable.
- The cable is guided in a guiding sleeve, which is preferably fixed to the fix part.

The invention also relates to a method of unlocking a parking brake of a rail vehicle by actuating a lever of the parking brake, characterized in that it comprises:
- providing an unlocking device as defined above,
- connecting the connection part with a groove of a door threshold of the rail vehicle,
- sliding the unlocking device along the groove until the movable rod comes laterally into contact with the lever,
- pulling the handle to drive the movable rod sliding into the fix part, while the lateral hook catches the lever to actuate it.

Several aspects and advantages of the invention will be enlightened in the following disclosure, given only as a non-limitative example and made in reference to joined figures in which:

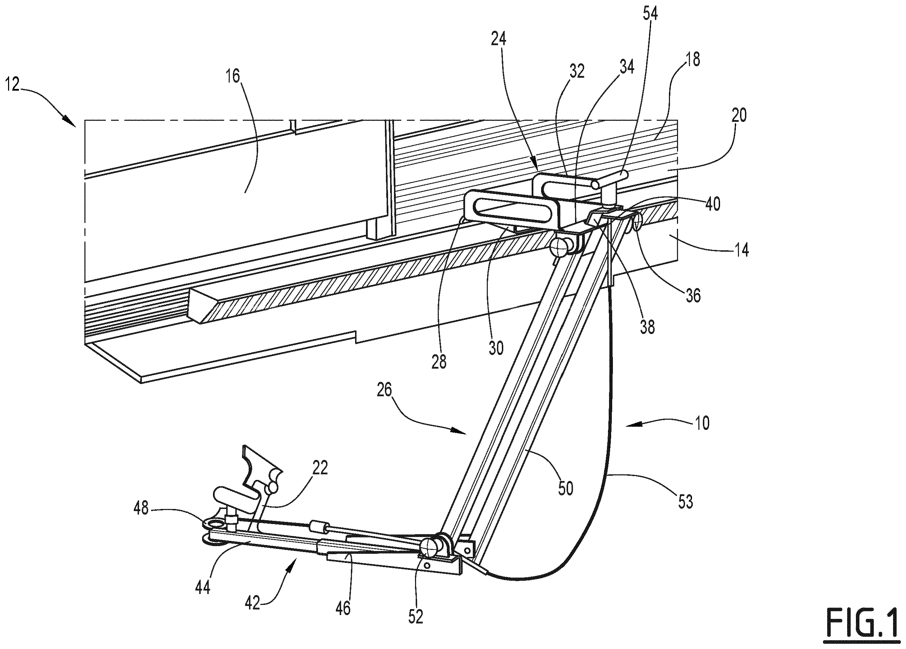

- Figure 1 is a schematic perspective view of an unlocking device according to an example of embodiment of the invention.

Figure 1 shows an unlocking device 10 according to an example of embodiment of the invention.

The unlocking device is intended to unlock a parking brake of a rail vehicle 12. The rail vehicle 12 comprises a body 14, and a bogie intended to support the body 14.

The body 14 comprises at least one access passage comprising a door 16 with a threshold 18. The threshold 18 has either a groove 20 in which the door 16 is able to slide or, in a variant, a machined groove 20 to place the device 10.

The bogie is equipped with a parking brake system, for example intended to be actuated when the rail vehicle 12 is standstill.

Such a parking brake system is well known in itself. The parking brake system classically comprises a lever 22 movable between an engaged position in which the parking brake is activated and a disengaged position in which the parking brake is deactivated. The lever 22 is shown in its engaged position on Figure 1.

Such a lever is usually arranged on the bogie, under the access passage.

The unlocking device 10 is intended to pull the lever 22 from its engaged position when the parking brake system has to be deactivated.

The unlocking device 10 extends from a proximal end, intended to be manipulated by an operator, to a distal end intended to actuate the lever 22.

The unlocking device 10 comprises, from the proximal end to the distal end, a connection part 24 and an arm 26.

The connection part 24 is arranged at the proximal end. The connection part 24 comprises connection means 28 for connecting the connection part 24 to the groove 20 of the door threshold 18 of the rail vehicle 12. For example, the connection means 28 comprise at least one hook intended to be inserted in the groove 20. This hook maintains the connection part 24 attached to the groove 20. The connection part 24 preferentially also comprises a resting area 30 for resting on the threshold 18.

The connection part 24 is longer than the distance between the groove 20 and a free end of the threshold, so that is it goes beyond this free end.

Preferentially, the connection part 24 comprises manipulation handles 32 (for example two manipulation handles), for manipulating the device 10 while putting the connection means 28 in place into the groove 20. The connection part 24 also comprises a flat part 34, for instance arranged between the manipulation handles 32. The flat part 34 and the resting area 30 are preferentially opposite faces of the connection part 24.

The arm 26 is attached to the connection part 24. For example, the arm 26 is rotatably connected to the connection part 24, via a rotatable connection 36. The rotation is limited by a stop 38 protruding from the arm 26, cooperating with the connection part 24. The rotation is secured by a protruding element 40 of the arm 26, cooperating with the connection part 24.

The arm 26 comprises a telescopic part 42 comprising a movable rod 44 intended to slide in regard to a fix part 46. The movable rod 44 is arranged at the distal end of the unlocking device 10. The movable rod 44 also comprises a distal end having a lateral hook 48. The lateral hook 48 is intended to cooperate with the lever 22. Preferentially, the lateral hook 48 is preferentially curved in order to receive the lever 22 in a concavity.

The fix part 46 is intended to guide the movable rod 44 when sliding in a telescopic manner.

In the example shown, the arm 26 comprises a downward part 50, holding the telescopic part 42. The downward part 50 extends from the connection part 24 to an attachment 52 with the telescopic part 42.

Preferentially, the attachment 52 is a rotatable link, with stops delimiting an active position. Thus, the arm 26 can be folded when not used.

The unlocking device 10 also comprises at least one linkage, preferentially a cable 53, extending along the unlocking device 10 from the connection 24 part to the movable rod 44. The cable 53 is attached to a handle 54 at the proximal end and attached to the movable rod 44 at the distal end.

The cable 53 is guided in a guiding sleeve, which is preferably fixed to the fix part 46.

Preferentially, the handle 54 is held by the protruding part 38. To this end, the protruding part 38 comprises a passage for the cable 53, the passage being smaller than the handle 54.

A method of unlocking the parking brake will now be disclosed.

First, the unlocking device 10 is provided, and deployed by unfolding it around the rotatable connections 36 and 52.

The unlocking device 10 is then assembled with the groove 20, by inserting the hook of the connection means 28 into this groove 20.

The unlocking device 10 is then translated along le groove 20 until the movable rod 44 comes laterally into contact with the lever 22. In this position, the lateral hook 48 is in regards with the lever 22.

The handle 54 is then pulled, pulling the cable 53, so pulling the movable rod 44. The movable rod 44 slides into the fix part 46, so the lateral hook 48 comes into contact with the lever 22. The shape of the lateral hook 48 ensures the lateral hook 48 catches the lever 22.

The handle 54 is pulled until the lever 22 is driven in its disengaged position.

It clearly appears that the unlocking device 10 allows an operation to actuate the lever from the door threshold.

## Claims

1. An unlocking device (10) for unlocking a parking brake of a rail vehicle (12), the unlocking device (10) extending from a proximal end to a distal end, **characterized in that** the unlocking device (10) comprises:
- a connection part (24) arranged at the proximal end, comprising connection means (28) for connecting the unlocking device (10) to a groove (20) of a door threshold (18) of the rail vehicle (12),
- an arm (26) comprising a telescopic part (42) including a movable rod (44) and a fix part (46), the movable rod (44) being able to slide into the fix part (46), and the movable rod (44) holding a lateral hook (48) at the distal end,
- at least one linkage (53), extending along the unlocking device (10) from the connection part (24) to the movable rod (44), attached to a handle (54) at the proximal end and attached to movable rod (44) at the distal end.

2. The unlocking device (10) according to claim 1, wherein the connection part (24) comprises at least one manipulation handle (32).

3. The unlocking device (10) according to claim 1 or 2, wherein the arm (26) is rotatably connected to the connection part (24), via a rotatable connection (36).

4. The unlocking device (10) according to claim 3, wherein the rotation around the rotatable connection (36) is limited by a stop (38) protruding from the arm (26), cooperating with the connection part (24), and secured by a protruding element (40) of the arm (26), cooperating with the connection part (24).

5. The unlocking device (10) according to claim 4, wherein the handle (54) is held by the protruding stop (38).

6. The unlocking device (10) according to any of preceding claims, wherein the lateral hook (48) is curved.

7. The unlocking device (10) according to any of preceding claims, wherein the arm (26) comprises a downward part (50) holding the telescopic part (42), the downward part (50) extending from the connection part (24) to an attachment (52) with the telescopic part (42).

8. The unlocking device (10) according to claim 7, wherein the attachment (52) is a rotatable link.

9. The unlocking device (10) according to any of preceding claims, wherein the linkage is a cable (53).

10. The unlocking device (10) according to claim 9, wherein the cable (53) is guided in a guiding sleeve, which is preferably fixed to the fix part (46).

11. A method of unlocking a parking brake of a rail vehicle by actuating a lever (22) of the parking brake, **characterized in that** it comprises:
- providing an unlocking device (10) according to any of claims 1 to 10,
- connecting the connection part (24) with a groove (20) of a door threshold (18) of the rail vehicle,
- sliding the unlocking device (10) along the groove (20) until the movable rod (44) comes laterally into contact with the lever (22),
- pulling the handle (54) to drive the movable rod (44) sliding into the fix part (46), while the lateral hook (48) catches the lever (22) to actuate it.

## Patentansprüche

1. Entriegelungsvorrichtung (10) zum Entriegeln einer Feststellbremse eines Schienenfahrzeugs (12), wobei sich die Entriegelungsvorrichtung (10) von einem proximalen Ende zu einem distalen Ende erstreckt, **dadurch gekennzeichnet, dass** die Entriegelungsvorrichtung (10) umfasst:
- einen an dem proximalen Ende angeordneten Verbindungsteil (24), welcher Verbindungsmittel (28) zum Verbinden der Entriegelungsvorrichtung (10) mit einer Nut (20) einer Türschwelle (18) des Schienenfahrzeugs (12) umfasst,
- einen Arm (26), welcher einen teleskopischen Teil (42) umfasst, der eine bewegliche Stange (44) und einen feststehenden Teil (46) umfasst, wobei die bewegliche Stange (44) dazu in der Lage ist, in den feststehenden Teil (46) zu gleiten, und wobei die bewegliche Stange (44) an dem distalen Ende einen lateralen Haken (48) hält,
- wenigstens ein sich von dem Verbindungsteil (24) entlang der Entriegelungsvorrichtung (10) zu der beweglichen Stange (44) erstreckendes Verbindungsglied (53), welches an dem proximalen Ende an einem Griff (54) befestigt ist und an dem distalen Ende an der beweglichen Stange (44) befestigt ist.

2. Entriegelungsvorrichtung (10) nach Anspruch 1, wobei der Verbindungsteil (24) wenigstens einen Handhabungsgriff (32) umfasst.

3. Entriegelungsvorrichtung (10) nach Anspruch 1 oder 2, wobei der Arm (26) über eine drehbare Verbindung (36) drehbar mit dem Verbindungsteil (24) verbunden ist.

4. Entriegelungsvorrichtung (10) nach Anspruch 3, wobei die Drehung um die drehbare Verbindung (36) durch einen von dem Arm (26) vorstehenden Anschlag (38) begrenzt ist, welcher mit dem Verbindungsteil (24) zusammenwirkt, und durch ein vorstehendes Element (40) des Arms (26) gesichert ist, welches mit dem Verbindungsteil (24) zusammenwirkt.

5. Entriegelungsvorrichtung (10) nach Anspruch 4, wobei der Griff (54) durch den vorstehenden Anschlag (38) gehalten ist.

6. Entriegelungsvorrichtung (10) nach einem der vorhergehenden Ansprüche, wobei der laterale Haken (48) gekrümmt ist.

7. Entriegelungsvorrichtung (10) nach einem der vorhergehenden Ansprüche, wobei der Arm (26) einen nach unten gerichteten Teil (50) umfasst, welcher den teleskopischen Teil (42) hält, wobei sich der nach unten gerichtete Teil (50) von dem Verbindungsteil (24) zu einer Befestigung (52) an dem teleskopischen Teil (42) erstreckt.

8. Entriegelungsvorrichtung (10) nach Anspruch 7, wobei die Befestigung (52) ein drehbares Gelenk ist.

9. Entriegelungsvorrichtung (10) nach einem der vorhergehenden Ansprüche, wobei das Verbindungsglied ein Seil (53) ist.

10. Entriegelungsvorrichtung (10) nach Anspruch 9, wobei das Seil (53) in einer Führungshülse geführt ist, welche vorzugsweise an dem feststehenden Teil (46) fixiert ist.

11. Verfahren zum Entriegeln einer Feststellbremse eines Schienenfahrzeugs durch ein Betätigen eines Hebels (22) der Feststellbremse, **dadurch gekennzeichnet, dass** es umfasst:
- Bereitstellen einer Entriegelungsvorrichtung (10) nach einem der Ansprüche 1 bis 10,
- Verbinden des Verbindungsteils (24) mit einer Nut (20) einer Türschwelle (18) des Schienenfahrzeugs,
- Verschieben der Entriegelungsvorrichtung (10) entlang der Nut (20), bis die bewegliche Stange (44) lateral in Kontakt mit dem Hebel (22) kommt,
- Ziehen des Griffs (54), um die bewegliche Stange (44) anzutreiben, welche in den feststehenden Teil (46) gleitet, wobei der laterale Haken (48) den Hebel (22) erfasst, um ihn zu betätigen.

## Revendications

1. Dispositif de déverrouillage (10) pour déverrouiller un frein de stationnement d'un véhicule ferroviaire (12), le dispositif de déverrouillage (10) s'étendant à partir d'une extrémité proximale jusqu'à une extrémité distale, **caractérisé en ce que** le dispositif de déverrouillage (10) comprend :
- une partie de liaison (24) agencée à l'extrémité proximale, comprenant des moyens de liaison (28) pour relier le dispositif de déverrouillage (10) à une rainure (20) d'un seuil de porte (18) du véhicule ferroviaire (12),
- un bras (26) comprenant une partie télescopique (42) comportant une tige mobile (44) et une partie fixe (46), la tige mobile (44) pouvant glisser dans la partie fixe (46), et la tige mobile (44) retenant un crochet latéral (48) à l'extrémité distale,
- au moins une tringlerie (53), s'étendant le long du dispositif de déverrouillage (10) à partir de la partie de liaison (24) jusqu'à la tige mobile (44), fixée à une poignée (54) à l'extrémité proximale et fixée à la tige mobile (44) à l'extrémité distale.

2. Dispositif de déverrouillage (10) selon la revendication 1, dans lequel la partie de liaison (24) comprend au moins une poignée de manipulation (32).

3. Dispositif de déverrouillage (10) selon la revendication 1 ou 2, dans lequel le bras (26) est relié de manière rotative à la partie de liaison (24), via une liaison rotative (36).

4. Dispositif de déverrouillage (10) selon la revendication 3, dans lequel la rotation autour de la liaison rotative (36) est limitée par une butée (38) faisant saillie à partir du bras (26), coopérant avec la partie de liaison (24), et immobilisée par un élément saillant (40) du bras (26), coopérant avec la partie de liaison (24).

5. Dispositif de déverrouillage (10) selon la revendication 4, dans lequel la poignée (54) est retenue par la butée (38) saillante.

6. Dispositif de déverrouillage (10) selon l'une quelconque des revendications précédentes, dans lequel le crochet latéral (48) est incurvé.

7. Dispositif de déverrouillage (10) selon l'une quelconque des revendications précédentes, dans lequel le bras (26) comprend une partie descendante (50) retenant la partie télescopique (42), la partie descendante (50) s'étendant à partir de la partie de liaison (24) jusqu'à une fixation (52) avec la partie télescopique (42).

8. Dispositif de déverrouillage (10) selon la revendication 7, dans lequel la fixation (52) est une bielle rotative.

9. Dispositif de déverrouillage (10) selon l'une quelconque des revendications précédentes, dans lequel la tringlerie est un câble (53).

10. Dispositif de déverrouillage (10) selon la revendication 9, dans lequel le câble (53) est guidé dans un manchon de guidage, qui est de préférence fixé à la partie fixe (46).

11. Procédé de déverrouillage d'un frein de stationnement d'un véhicule ferroviaire par actionnement d'un levier (22) du frein de stationnement, **caractérisé en ce qu'**il comprend :
- la fourniture d'un dispositif de déverrouillage (10) selon l'une quelconque des revendications 1 à 10,
- la liaison de la partie de liaison (24) à une rainure (20) d'un seuil de porte (18) du véhicule ferroviaire,
- le glissement du dispositif de déverrouillage (10) le long de la rainure (20) jusqu'à ce que la tige mobile (44) entre latéralement en contact avec le levier (22),
- la traction de la poignée (54) pour entraîner la tige mobile (44) en coulissement dans la partie fixe (46), tandis que le crochet latéral (48) attrape le levier (22) pour l'actionner.
